# EUROPEAN PATENT APPLICATION

(11) **EP 0 691 078 A2**
(43) Date of publication of application: **10.01.1996**
(21) Application number: 95201462.9
(22) Date of filing: 02.06.1995
(51) Int. Cl.: A21D 13/00, A21D 8/04

(54) **Method for the industrial preparation of pizzas of pizzeria or pizza napoletana type**

(30) Priority: 08.06.1994 IT MI941197
(71) Applicant: M.G. BRAIBANTI S.p.A., I-20122 Milan (IT)
(72) Inventor: Degli Angeli, Alessandro, I-43100 Parma (IT)
(74) Representative: Appoloni, Romano

(57) **Abstract**

A method for the industrial preparation of pizzas of pizzeria or pizza napoletana type is described, comprising the following stages:
a) ingredient proportioning; b) kneading; c) maturing in troughs; d) degassing; e) division into sized pieces; f) leavening; g) base formation; h) topping; i) baking; l) deep-freezing and packaging; wherein during the kneading stage ) a culture broth containing bacteria and yeast is added to the dough mix, the maturing stage c) in troughs being effected for a time of between 30 and 90 minutes, the cabinet leavening stage f) requiring a time of 20-30 minutes, and the baking stage i) being followed by a stabilization stage ii). The main advantage of the method is that by adding the culture broth to the dough mix the maturing and leavening times are shortened, with consequent economic advantage.

## Description

This invention relates to a method for the industrial preparation of pizzas of pizzeria or pizza napoletana type.

At the craftsman level, pizzas of pizzeria type are prepared in a considerable number of stages, specifically a first stage consisting of kneading in a bread kneader; a second stage consisting of maturing generally for 12-24 hours, although better results are obtained by maturing for 48 hours comprising 24 hours at a temperature of between 18°C and 20°C and 24 hours at a temperature of between 0°C and 3°C; a third stage consisting of remixing or degassing with the addition of oil and salt; a fourth stage consisting of maturing for 1-2 hours in a trough; a fifth stage consisting of division into balls; a sixth stage consisting of leavening in a cabinet for a time of 2-4 hours; a seventh stage consisting of formation of the base; an eighth stage consisting of adding the topping; and finally a ninth stage consisting of baking.

During the second stage in which the dough is matured (fermented) for 24-48 hours in a conditioned environment, organic acids (such as lactic acid, acetic acid, etc.) are produced and act on the flour proteins to relax the gluten and result in a particular rheological structure enabling the ball of dough to be easily flattened, with the formation of an outer rim of soft dough.

In this manner a disc of dough is obtained, which can also be very thin and which on baking forms a soft structure giving the dough particular digestibility, the final product having the characteristic dough flavour and taste.

Known industrial methods comprise a first stage consisting of proportioning the ingredients, followed by kneading, dividing into balls of dough and rounding them. A leavening stage in suitable cabinets then follows.

This is followed by rolling, topping, baking in an oven at 250°C-280°C for 10-12 minutes and finally packaging and/or deep-freezing.

However the product obtained by these methods lacks the special characteristics of pizzeria pizzas, being of fairly thick honeycombed structure without the tall circular vesiculate rim, ie a product having the characteristic structure of a focaccia-type pizza.

A method is also known in which the leavening is carried out in troughs.

This second type of method enables a product to be obtained which is much closer to pizzeria pizzas, but is still not completely satisfactory. In particular, the product obtained has the drawback of excessive moisture loss at the outer rim during deep-freezing and during the thawing and baking by the consumer.

This loss is due to the fact that the rim forms by an expansion of dough (rather than by an accumulation of dough as happens at the craftsman level) during baking.

The object of the present invention is therefore to obviate the drawbacks of the known art by a method enabling a product to be obtained which is extremely close in quality to the craftsman product, while at the same time achieving a considerable reduction in the time required for maturing (24-48 hours) and cabinet leavening (1-2 hours), which from an industrial viewpoint are untenable.

This object is attained according to the present invention by a method for the industrial preparation of pizzas of pizzeria or pizza napoletana type, comprising the following stages:
a) ingredient proportioning;
b) kneading;
c) maturing in troughs;
d) degassing;
e) division into sized pieces;
f) leavening;
g) base formation;
h) topping;
i) baking;
l) deep-freezing and packaging;
characterised in that during the kneading stage b) a culture broth containing bacteria and yeast is added to the dough mix,
the maturing stage c) in troughs being effected for a time of between 30 and 90 minutes,
the cabinet leavening stage f) requiring a time of 20-30 minutes, and
the baking stage i) being followed by a stabilization stage ii).

The main advantage of the method of the present invention is the fact that the addition of said broth during the kneading stage shortens the maturing time by eliminating the 24-48 hour maturing stage which from an industrial viewpoint is untenable.

The leavening time is also reduced with the consequent advantage of a shortening of the leavening cabinet and hence a considerable cost reduction.

The structural and functional characteristics and the advantages of a method according to the present invention will be more apparent from the detailed description thereof given hereinafter by way of non-limiting example.

The dough which is mixed with the culture broth during the kneading stage b) is prepared using the following ingredients in the stated proportions (expressed as parts by weight):

| | |
|---|---|
| strong flour (W = 200-250; P/L = 0.4-0.6) | 100 |
| water | 60-72 |
| olive oil | 4-5 |
| salt | 2.5 |
| malt | 2 |
| sugar | 1.5 |
| compressed yeast | 2-4 |

The culture broth contains bacteria such as L-Plantarum, L-Brevis, Leuconostoc Mesentertipes and L-San Francisco, and yeast such as Saccaromyces Cerevisiae, Saccaromyces Exiguus and Sporobolomyces Odorus and was supplied by the company Bioanswer of Turin.

This broth hence already contains the fermentation products of the yeast and bacteria, and in particular lactic acid, acetic acid, dextran, ethyl alcohol, enzymes, glycerol, organic esters, trimethylacetic acid and carbon dioxide.

The kneading stage b) is carried out in a kneader of spiral or dipping arm type, or another bread kneader.

There then follow a maturing stage c) in troughs and a degassing stage d).

The maturing stage c) is carried out in troughs for a time of between 30 and 90 minutes at a temperature of between 18°C and 20°C.

During this stage, because of the presence of the fermentation broth all the chemical and physical phenomena which would otherwise have required 24-48 hours take place in one hour.

In this respect, this broth incorporated into the dough has the same effect on the gluten (same rheology) as lengthy maturing in that it induces the same relaxation and consequently a dough rheology suitable for subsequent flattening of the ball, to obtain a thin structure with a tall vesiculate rim.

It also results in the production of the aromatic substances responsible for the flavour and taste of the dough.

Stage e) is then carried out involving division into pieces of the required size, particularly into balls, followed by stage f) involving leavening in a cabinet.

The cabinet leavening stage f) is carried out at a temperature of between 32°C and 35°C at a percentage humidity of between 75% and 80%.

The product obtained in this manner is then subjected to the base formation stage g) followed by the topping stage h) and baking i) in an oven of refractory material with light forced air circulation in its upper part. Optimum baking is achieved at a temperature of between 300°C and 450°C for a time of between 80 and 150 seconds.

The baking stage i) is followed by a stabilization stage ii).

The stabilization stage ii) requires a time of between 5 and 60 minutes at high relative humidity (60-100%).

In particular, it is effected for a time of between 20 and 30 minutes at a relative humidity of between 80 and 90%.

During the stabilization stage ii) at least one spray treatment is carried out using atomized water which, by means of suitable atomization stations, is sprayed partly onto the entire product and partly onto its rim.

In a preferred embodiment four spray treatments are carried out, these four spray treatments being effected as follows: the first on leaving the oven, the second at one quarter through the stabilization stage, the third at three quarters through the stabilization stage, and the fourth 1-2 minutes before commencement of the deep-freezing stage l).

The fourth spray treatment is carried out only on the outer rim of the product.

The product treated in this manner then reaches the final deep-freezing and packaging stage l).

As already stated, the main advantage of the method according to the present invention is that by adding the culture broth to the dough mix, the maturing and leavening times are shortened, with consequent economic advantage and elimination of the 24-48 hour maturing stage, which from an industrial viewpoint is untenable.

A further advantage of the method of the present invention is the shortening of the leavening cabinet, made possible precisely by the shorter leavening time, with considerable cost reduction.

In addition a qualitatively superior product very close to the craftsman product is obtained, with a rim having a good degree of softness.

## Claims

1. A method for the industrial preparation of pizzas of pizzeria or pizza napoletana type, comprising the following stages:
a) ingredient proportioning;
b) kneading;
c) maturing in troughs;
d) degassing;
e) division into sized pieces;
f) leavening;
g) base formation;
h) topping;
i) baking;
l) deep-freezing and packaging;
characterised in that during the kneading stage b) a culture broth containing bacteria and yeast is added to the dough mix,
the maturing stage c) in troughs being effected for a time of between 30 and 90 minutes,
the cabinet leavening stage f) requiring a time of 20-30 minutes, and
the baking stage i) being followed by a stabilization stage ii).

2. A method as claimed in claim 1, characterised in that the maturing stage c) is carried out at a temperature of between 18°C and 20°C.

3. A method as claimed in claim 1, characterised in that the cabinet leavening stage f) is carried out at a temperature of between 32°C and 35°C at a percentage humidity of between 75% and 80%.

4. A method as claimed in claim 1, characterised in that the baking stage i) is carried out at a temperature of between 300°C and 450°C for a time of between 80 and 150 seconds.

5. A method as claimed in claim 1, characterised in that the stabilization stage ii) requires a time of between 5 and 60 minutes at high relative humidity (60-100%).

6. A method as claimed in claim 5, characterised in that the time is between 20 and 30 minutes and the relative humidity is between 80 and 90%.

7. A method as claimed in claim 1, characterised in that during the stabilization stage ii) at least one spray treatment is carried out using atomized water which, by means of suitable atomization stations, is sprayed partly onto the entire product and partly onto its rim.

8. A method as claimed in claim 7, characterised in that four spray treatments are carried out.

9. A method as claimed in claim 8, characterised in that the four spray treatments are carried out as follows: the first on leaving the oven, the second at one quarter through the stabilization stage, the third at three quarters through the stabilization stage, and the fourth 1-2 minutes before commencement of the deep-freezing stage l).

10. A method as claimed in claim 9, characterised in that the fourth spray treatment is carried out only on the outer rim of the product.
